(19) Europäisches Patentamt
European Patent Office
Office européen des brevets

(11) **EP 1 201 021 B1**

(12) **FASCICULE DE BREVET EUROPEEN**

(45) Date de publication et mention
de la délivrance du brevet:
**15.08.2007 Bulletin 2007/33**

(51) Int Cl.:
***H02K 37/18*** *(2006.01)*

(21) Numéro de dépôt: **00940106.8**

(86) Numéro de dépôt international:
**PCT/CH2000/000381**

(22) Date de dépôt: **12.07.2000**

(87) Numéro de publication internationale:
**WO 2001/005019 (18.01.2001 Gazette 2001/03)**

(54) **DISPOSITIFS ELECTROMAGNETIQUES DE TYPE MOTEUR OU GENERATEUR**

ELEKTROMAGNETISCHE MOTOR ODER GENERATOR VORRICHTUNGEN

MOTOR OR GENERATOR TYPE ELECTROMAGNETIC DEVICES

(84) Etats contractants désignés:
**AT BE CH CY DE DK ES FI FR GB GR IE IT LI LU
MC NL PT SE**

(30) Priorité: **12.07.1999 EP 99810614**

(43) Date de publication de la demande:
**02.05.2002 Bulletin 2002/18**

(73) Titulaire: **MMT S.A.**
**6304 Zug (CH)**

(72) Inventeurs:
• **OUDET, Claude**
**F-25000 Besançon (FR)**
• **URWYLER, Jean-François**
**CH-2732 Reconviller (CH)**

(74) Mandataire: **Reuteler, Raymond Werner**
**Reuteler & Cie SA**
**Chemin de la Vuarpillière 29**
**1260 Nyon (CH)**

(56) Documents cités:
**EP-A- 0 288 050** **EP-A- 0 581 612**

Printed by Jouve, 75001 PARIS (FR)

**Description**

La présente invention concerne des dispositifs électro-magnétiques, à savoir des moteurs à course illimitée ou à course limitée (actionneurs) et générateurs, mono- ou polyphasés, comportant au moins deux jeux de dents en matériau magnétique doux et en déplacement relatif par phase, un jeu de dents étant lié au stator et l'autre à la partie mobile à mouvement rotatif ou linéaire (ci-après "rotor"). Chaque jeu de dents peut comporter plusieurs dents dont le nombre peut être différent au stator et au rotor. A la limite, l'un des jeux, ou les deux, peut ne comporter qu'une seule dent.

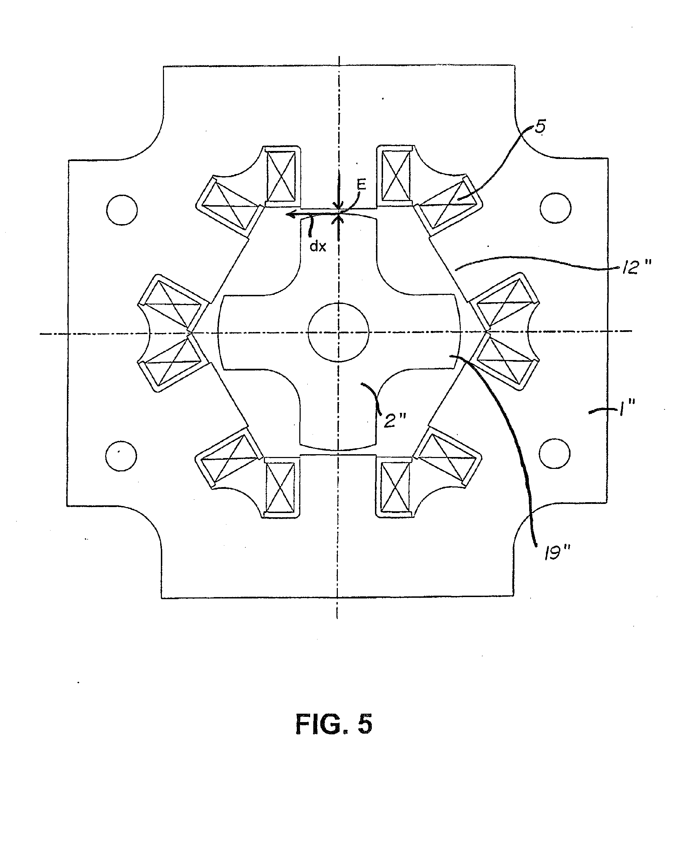

Dans beaucoup de dispositifs de ce type, le pas entre les dents est sensiblement constant et sensiblement le même pour les deux jeux de dents. La réluctance au passage du champ magnétique entre ces jeux de dents, et par suite la perméance qui est l'inverse de la réluctance, est variable au cours du déplacement. Lorsqu' une extrémité de dent du stator et une extrémité de dent du rotor sont face à face, elles déterminent entre elles un entrefer de longueur minimale E. Dans les dispositifs concernés par l'invention, le déplacement élémentaire dx (cf. Fig. 5) de la dent du rotor est parallèle à la tangente à l'extrémité de la dent du stator, ce qui les distingue des électro-aimants dont le déplacement se fait dans le sens de l'entrefer minimum.

Des dispositifs à mouvement rotatif ou linéaire ayant les caractéristiques susmentionnées peuvent être des moteurs, actionneurs ou générateurs à réluctance variable, c'est-à-dire sans aimant permanent, ou des moteurs, actionneurs ou générateurs hybrides, dits aussi réluctants polarisés, qui comportent au moins un aimant permanent au stator ou au rotor.

Dans les versions rotatives les plus courantes, le dispositif comporte un rotor de forme générale cylindrique constitué par au moins un ensemble coaxial comprenant au moins une partie polaire de rotor fixée sur un axe, chaque partie polaire de rotor présentant une denture formée par des dents radiales disposées le long de sa périphérie en respectant un pas uniforme. Le dispositif comporte un stator qui comprend une partie de circuit magnétique en matériau magnétique doux, de forme générale annulaire, coaxiale par rapport au rotor, constituée d'une partie périphérique et de plusieurs parties polaires de stator. Chacune de ces parties polaires de stator est alimentée par au moins une bobine électrique et comporte une ou plusieurs dents orientées radialement de façon à faire face à la denture du rotor. Les dents du stator, s'il y en a plus d'une par partie polaire, sont disposées sensiblement selon le même pas que les dents du rotor, une dent du rotor et une dent du stator placées en regard définissant entre elles un entrefer radial de longueur minimale E. Il existe également des variantes à entrefer axial, ou à entrefer oblique.

De tels dispositifs électromagnétiques sont connus depuis plusieurs dizaines d'années. Les types hybrides sont largement utilisés, notamment sous forme de moteurs pas-à-pas di- ou triphasés. Des descriptions de ces dispositifs se trouvent par exemple dans le livre "Stepping motors and their microprocessor controls" par Takashi Kenio et Akira Sugavara, Clarendon Press, Oxford 1994, deuxième édition, pages 28 à 36 pour les moteurs à réluctance variable, pages 37 à 44 pour les moteurs hybrides, ou dans le Traite d'électricité de l'Ecole Polytechnique Fédérale de Lausanne, volume IX, "Electromécanique" par Marcel Jufer, Presses polytechniques et universitaires romandes, § 11.2.5 "Moteur réluctant à simple circuit" et § 11.2.11 "Moteur réluctant polarisé". Les variantes à mouvement linéaire correspondent à un déroulement des moteurs rotatifs et sont décrites par exemple à la page 33 dans l'ouvrage précité de T. Kenjo et au § 11.13 dans l'ouvrage précité de M. Jufer.

Ces dispositifs ont fait l'objet de nombreuses études théoriques, cf. notamment l'article de Marcel Jufer et Gunter Heine "Hybrid stepper motor torque and inductance characteristics with saturation effects" paru dans "Incremental Motion Control Systems and Devices (IMCSD) Proceedings", Fifteenth Annual Symposium, 1986, pages 207 à 211, et les références citées dans cet article.

Dans la conception traditionnelle de ces dispositifs, on considère que la longueur de l'entrefer entre deux dents en regard doit être la plus courte possible compte tenu des contraintes techniques découlant des tolérances de fabrication au niveau du diamètre, de la concentricité, du centrage, des bavures et d'autres sources d'imprécision. T. Kenjo le dit clairement à la page 30 de l'ouvrage précité dans le chapitre intitulé « Air-gap should be as small as possible ». Cette conception a été soutenue par la théorie. En effet, selon l'expression fondamentale bien connue pour calculer des forces ou des couples en électromagnétisme dérivant de l'expression de l'énergie magnétique stocké dans l'entrefer, deux jeux de dents en déplacement relatif suivant le degré de liberté $\alpha$ engendrent un couple C proportionnel à $\dfrac{dA}{d\alpha}U^2$,

formule dans laquelle U est la différence de potentiel magnétique appliqué entre ces jeux de dents et A la perméance entre eux. Il peut s'agir, dans un moteur à réluctance variable, d'une différence de potentiel magnétique due seulement aux ampères-tours engendrés par une ou plusieurs bobines parcourues par un courant, disposées de diverses manières possibles, ou, dans un moteur hybride, de la somme algébrique de la différence de potentiel magnétique $U_a$ polarisant l'entrefer sous l'influence de l'aimant permanent et de la différence de potentiel magnétique $U_{ni}$ engendré par la ou les bobines déjà citées.

La dérivée de la perméance dA/d$\alpha$ peut se mettre sous la forme d'un développement en série de Fourier, comme la perméance elle-même :

$$A = a_o + a_1 \sin(N\alpha) + a_2 \sin(2N\alpha)...,$$

$$dA/d\alpha = Na_1 \cos(N\alpha) + 2Na_2 \cos(2N\alpha)...$$

N étant le nombre de dents du rotor par tour, ou, si le rotor n'est pas complètement denté, le rapport $2\pi$/(pas angulaire) des dents existantes.

Le premier terme de la dérivée de cette expression par rapport à $\alpha$, dit terme fondamental, est $Na_1 \cos(N\alpha)$. Dans un moteur ou un actionneur destiné au contrôle de mouvement, ou dans un générateur dont on attend une tension bien sinusoïdale, le nombre de dents N étant fixé, on cherche à augmenter l'amplitude $a_1$ du fondamental et à réduire autant que possible l'amplitude $a_2$, $a_3$ ... des harmoniques en $\cos(2N\alpha)$, $\cos(3N\alpha)$,... Le fondamental du couple prend alors l'expression [1]:

$$C = \frac{dA}{d\alpha} U^2 = Na_1 U^2 \cos(N\alpha) \qquad [1]$$

Il est bien connu que le terme $a_1$ augmente quand l'entrefer diminue. Le couple C étant proportionnel à ce terme, il semblait logique de choisir l'entrefer minimal compatible avec le procédé de fabrication.

Dans le cas d'un moteur hybride d'une taille courante (taille dite 23 soit diamètre $\approx$57mm, longueur $\approx$51mm), l'entrefer minimal habituel est de l'ordre de 0,07 à 0,08mm, ce qui entraîne des contraintes sévères au niveau des tolérances de fabrication et augmente donc les coûts de fabrication. En pratique, l'entrefer E des moteurs conventionnels de cette taille est toujours $\leq$ 0,1 mm.

Pour un tel moteur hybride, la différence de potentiel maximale $U_{max}$ intervenant dans la formule du couple ci-dessus est $U_{max} = U_{ni(max)} + U_a$. Dans la taille citée, la bobine fournit par exemple, en régime permanent, une différence de potentiel maximale $U_{ni(max)}$ = 85At entre dents. Le couple dû au courant étant maximal lorsque $U_a \approx U_{ni(max)}$, $U_a$ est aussi ajusté à environ 85At, donc $U_{max}$=170At. En négligeant les pertes de potentiel dans les matériaux magnétiques doux du stator et du rotor, l'induction B dans l'entrefer est

$$B = \mu_o U_{max}/E \qquad [2]$$

Si on veut se limiter à B=2T en raison de la saturation du matériau du circuit magnétique, on calcule E=1,07x10$^{-4}$m. Donc, un entrefer de 7 à 8x10$^{-4}$m conduit à une légère saturation du fer-silicium utilisé comme matériau magnétique doux. Mais quand on utilise uniquement ce type de moteur avec un faible pourcentage de marche (duty cycle), on pourrait augmenter les ampères-tours pendant les brèves périodes de fonctionnement et donc augmenter l'entrefer de façon à rester dans le domaine linéaire décrit par la relation [2]. Or, dans les dispositifs conventionnels, on ne le fait pas pour la raison citée plus haut : on préfère garder maximale la dérivée de la perméance, donc le faible entrefer, et saturer davantage le circuit magnétique.

On relève par exemple dans l'ouvrage précité de M. Jufer donnant au §11.19.1 les caractéristiques d'un moteur pas à pas réluctant rotatif de marque WARNER : E= 0,05mm et $U_{max}$=14/5*80=224At, soit 3 fois la valeur des ampères-tours suffisants pour amener B à 2T dans l'entrefer de 5x10$^{-6}$m. Certes, cela fait monter encore le couple crête, mais engendre surtout une grande distorsion de la fonction C=f($\alpha$) qui n'est pas du tout une fonction sinusoïdale. Ceci est bien illustré dans l'ouvrage de M. Jufer au §11.11.7 et Fig. 11.85. De plus le couple n'est plus une fonction simple du

courant : le terme $a_1$ devient lui-même fonction de $U_{max}$. Il en résulte dans beaucoup d'applications de graves inconvénients, par une augmentation de la modulation de la vitesse instantanée et du couple ("cogging" en anglais) dû au courant quand le moteur est censé tourner à vitesse constante en délivrant un couple constant, et une augmentation du bruit. Il en résulte aussi de moins bonnes qualités de positionnement en boucle ouverte, particulièrement lorsqu'on a besoin de subdiviser les pas.

Au vu de ces inconvénients, un but de l'invention est de fournir un dispositif électromagnétique qui soit agencé de façon à permettre une réduction sensible des coûts de fabrication et/ou d'améliorer sa caractéristique de couple C=f($\alpha$).

Il est avantageux, pour une utilisation pour du contrôle de mouvement en boucle ouverte ou fermée, de fournir un dispositif électromagnétique qui délivre, pour chaque phase, une loi de couple sensiblement sinusoïdale jusqu'à une valeur de potentiel magnétique peu inférieure au potentiel maximal prévu.

Des buts de l'inventions sont réalisés par le dispositif selon la revendication 1.

Le dispositif électromagnétique selon l'invention, qui est d'une taille permettant la génération d'un potentiel magnétique maximal $U_{max}$ d'environ $1,7 \times 10^{-4} J/\mu_o$, soit environ 270At (ampères-tours) si J=2T, ou plus, est notamment caractérisé en ce que la longueur E de l'entrefer minimal mesurée dans le sens perpendiculaire au degré de liberté est choisie de façon:

que E est approximativement égal ou plus grand que la valeur de

$$0,7[1-5 \times 10^{-4} (U_{max} - 1,7 \times 10^{-4} J/\mu_o)] \mu_o U_{max}/J,$$

quand

$$[1-5 \times 10^{-4} (U_{max} - 1,7 \times 10^{-4} J/\mu_o)] \geq 0,5,$$

ou que E est approximativement égal ou plus grand que

$$0,35\mu_o U_{max}/J \text{ quand } [1-5 \times 10^{-4} (U_{max} - 1,7 \times 10^{-4} J/\mu_o)] < 0,5;$$

ou que E est plus grand que $2 \cdot 10^{-3}$m,

où:

- $\mu_o$ est la perméabilité du vide;

- $U_{max}$ est la différence de potentiel magnétique maximale engendrée pour faire passer le champ magnétique dans l'entrefer E, cette différence de potentiel étant due

  - soit aux seuls ampères-tours de la/les bobine(s) alimentant l'entrefer E
  - soit à l'addition desdits ampères-tours et de la différence de potentiel magnétique entre les deux jeux de dents, en l'absence de courant, due à un aimant permanent (dit potentiel de polarisation); et

- J est la polarisation maximale du matériau magnétique doux utilisé pour la réalisation de la denture ; ce J est défini par la relation habituelle B = $\mu_o$ H + J

dans laquelle H est assez grand pour atteindre environ 99% de la valeur limite de J, ou bien encore, en introduisant la perméabilité relative $\mu_r$, par la relation J = $\mu_o(\mu_r-1)$H (H étant assez grand pour engendrer environ 99% de la valeur limite de J).

Pour le fer-silicium laminé couramment utilisé comme matériau magnétique doux, J$\approx$2T.

Une étude approfondie des conditions de fonctionnement d'un moteur ou générateur a révélé, de façon surprenante et à l'encontre de la tendance générale visant à réduire les entrefers, qu'il est au contraire avantageux, pour optimiser le moteur ou générateur lorsqu'on dispose de suffisamment d'ampères-tours, d'augmenter les entrefers, plus particulièrement pour les moteurs ou générateurs dont le potentiel magnétique maximal est plus grand qu'environ $1,7 \cdot 10^{-4} J/\mu_o$.

Dans la présente invention, c'est le produit $a_1 U^2$ apparaissant dans l'expression [1] qui est optimisé, contrairement à tous les dispositifs conventionnels, où seulement le terme fondamental $a_1$ de la variation de perméance de la denture est optimisé.

Dans un générateur d'électricité, par exemple du type à réluctance variable polarisé, la tension est proportionnelle à $d\phi/dt$ ou $d\phi/d\alpha \cdot d\alpha/dt$. Le terme $d\alpha$ est la vitesse angulaire. Le flux est le produit d'une perméance par une différence de potentiel ; la variation de flux est proportionnelle à $a_1 U_a$. Lorsque le générateur débite, le courant augmente la différence de potentiel entre certains jeux de dents, et on retrouve une relation en $a_1 U^2$, comme pour un moteur, ce qui conduit aux mêmes conclusions au sujet de l'entrefer minimal E.

Lorsque le matériau magnétique doux travaille à une induction supérieure de seulement 2% à sa polarisation J, on a un domaine sensiblement linéaire de variation de l'induction B maximale en fonction de U rappelé plus haut par la relation [2]. On peut alors remplacer U dans l'expression du couple par la valeur $B E/\mu_o$, ce qui donne

$$C = \frac{N \, a_1 \, B^2 \, E^2}{\mu_0^2} \cos(N\alpha) \qquad\qquad\qquad [3]$$

Il est clair qu'il est préférable d'augmenter B, qui intervient au carré, autant que le permet le matériau magnétique doux, tout en restant dans la condition citée que, de préférence, B n'est supérieur à J que de 2% ou moins pour ne perdre qu'une faible partie de $U_{max}$ dans la matériau magnétique doux. Les critères de choix de ce matériau sont, par exemple, sa facilité de fabrication, son coût et la fréquence de fonctionnement du dispositif.

Dans la présente invention, il faut déterminer comment évolue le produit $a_1 E^2$ et non plus $a_1$ seul. Le facteur $a_1$ est une fonction du rapport pas/entrefer (P/E) de la denture. Cette fonction a pu être corrélée empiriquement avec une fonction puissance dans un large domaine de variation de P/E. Il s'avère que, à pas P de denture rotor (mesuré suivant l'arc) constant, $a_1$ est sensiblement proportionnel à $E^{-1,42}$ et ce jusqu'à des rapports P/E inférieurs à 10. Il en résulte que le produit $a_1 E^2$, et donc C, de façon très surprenante, est proportionnel à $E^{0,58}$ qui est une fonction croissante. Par exemple, quand on double E, le terme $E^{0,58}$ augmente d'environ 50 %. La puissance 0,58 peut varier légèrement en fonction de la forme des dents, mais la conclusion est toujours que le produit $a_1 E^2$ est une fonction croissante de E.

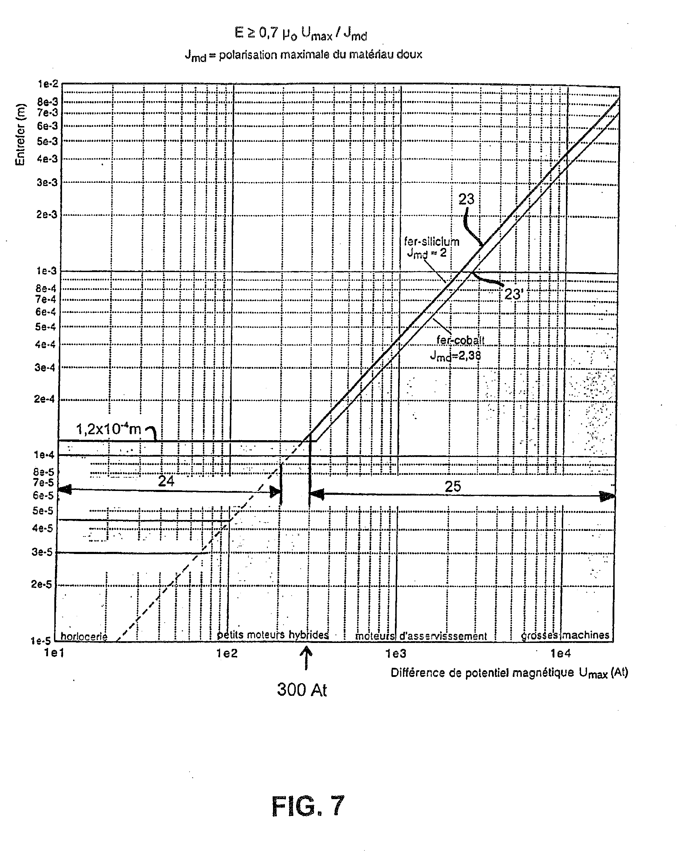

Il est clair que, pour bénéficier de cet avantage, il faut pouvoir augmenter $U_{max}$ comme E, comme le montre la Fig. 7 qui illustre, dans le domaine 25, la formule $E = 0,7 \, \mu_o \, U_{max}/J$, pour deux valeurs de J correspondant respectivement à un fer-silicium (ligne 23) d'usage courant et à un des meilleurs matériaux, à savoir le fer-cobalt (ligne 23'). Cette valeur de E va donc au-delà de la valeur qui engendrerait avec de petits entrefers une induction proche de la saturation du matériau doux utilisé. Aux faibles potentiels, c'est à dire où $U_{max}$ est inférieur à environ 114At pour du fer-silicium, comme indiqué par le domaine 24 de la Fig. 7, on tombe dans des valeurs d'entrefer de moins de $5 \times 10^{-5}$ m qui correspondent aux limites des possibilités de réalisation mécanique. Cet entrefer est alors déterminé par d'autres considérations que la formule ci-dessus, bien que les valeurs se recoupent.

L'invention s'applique de ce fait aux dispositifs d'une taille supérieure à quelque 40 à 50mm en version rotative. Pour ces dispositifs, $U_{max}$ est approximativement plus grand que $1,2 \cdot 10^{-4} J/0,7\mu_o$, tel qu'indiqué par le domaine 25 dans la Fig. 7.

En pratique, si on ne recherche pas une très grande qualité de fonctionnement en contrôle de mouvement, on peut accepter que B devienne plus grand que J de 5% par exemple en bout de dent. E serait défini par la formule $\mu_o U_{max}/1,05J$ si on admettait qu'il n'y a pas de perte de potentiel dans le matériau doux. Mais en réalité la perte de potentiel dans le matériau doux n'est plus négligeable, surtout au niveau des dents, et la différence de potentiel qui reste entre les deux jeux de dent n'est plus, par exemple, qu'environ 84 % de $U_{max}$. On peut donc définir la valeur de E limite par $0,84\mu_o U_{max}/1,05J$ soit $E \geq 0,8 \, \mu_o \, U_{max}/J$. Toutefois, avec certains matériaux magnétiques doux, on perd davantage d'ampères-tours à B=1,05 J, et il est raisonnable d'accepter de perdre 30% du potentiel engendré dans ce matériau doux sans trop influencer la linéarité du couple en fonction de la puissance électrique appliquée ou générée (suivant si c'est un moteur ou un générateur), de façon qu'il ne reste entre les dents que les 70% de $U_{max}$, donc $0,7 U_{max}$.

Une valeur préférée de E selon l'invention suit alors la relation

$$E \geq 0,7 \; \mu_o \; U_{max} \; /J. \tag{4}$$

Il est à noter que la progression des entrefers des dispositifs conventionnels augmente aussi avec $U_{max}$ puisque la taille croissante des dispositifs entraîne l'augmentation des tolérances de fabrication, de centrage et du jeu nécessaire pour la dilation thermique. Toutefois, dans les dispositifs conventionnels, on essaye toujours de garder l'entrefer aussi petit que possible, ce qui résulte en une progression des entrefers des machines conventionnels en fonction de $U_{max}$ moins raide que la relation [4] ci-dessus. Il est donc possible d'améliorer les dispositifs existants en augmentant leurs entrefers sans pour autant atteindre la valeur préférée de $E \geq 0,7 \; \mu_o \; U_{max}/J$.

A cet égard, pour des dispositifs de taille croissante, pouvant engendrer des valeurs élevées de $U_{max}$, la longueur du circuit magnétique en matériau doux peut amener des pertes croissantes mais acceptables pour certains usages (moteurs de traction par exemple), de telle sorte que l'on peut accepter de baisser la valeur du coefficient de $\mu_o \; U_{max} / J$. On peut définir ce coefficient d'affaiblissement par l'expression:

$$E \geq k \; 0,7 \; \mu_o \; U_{max} \; /J$$

où

$$K = 1 - 5 \cdot 10^{-4} (U_{max} - 1,7 \times 10^{-4} J / \mu_o)$$

avec la condition $K \geq 0,5$.

Comme on ne trouve pas d'entrefers E dans les dispositifs conventionnels dépassant 1 à 2mm, on peut améliorer les performances des grands dispositifs en augmentant l'entrefer au-delà de 1 à 2mm, même en étant en dessous de la valeur de l'entrefer suivant la relation de l'entrefer plus optimale [4] ci-dessus.

Il est remarquable que, lorsque l'entrefer augmente, à induction constante dans l'entrefer, la perte de potentiel magnétique dans les matériaux doux du stator et du rotor reste sensiblement constante. Donc cette perte ramené à la différence de potentiel magnétique total $U_{max}$ se trouve réduite, ce qui linéarise la caractéristique couple=f(puissance électrique appliquée) du dispositif. En effet, la puissance électrique appliquée est, comme le couple, en $U^2$. A l'inverse, dans les dispositifs suivant l'art antérieurs comme celui cité plus haut (M. Jufer §11.19.1) la perte de potentiel dans le matériau doux peut représenter plusieurs fois la différence de potentiel existant entre les sommets de dents. On ne peut s'attendre à aucune linéarité entre le couple et la puissance appliquée dans les dispositifs conventionnels.

A titre d'exemple, dans une forme d'exécution concernant un moteur hybride, c'est-à-dire un moteur muni d'un aimant permanent, si le matériau magnétique doux est un fer-silicium caractérisé par J=2T et dont chaque partie polaire de stator engendre sous l'effet du courant 160At, on est conduit à choisir pour $U_a$ également une valeur de l'ordre de 160At, soit $U_{max} \approx 320$ At. La règle de dimensionnement appliquée à ce moteur conduit à une valeur de E de $1,6 \times 10^{-4}$m ou 0,16 mm, valeur nettement supérieure à celle correspondant à la technologie ancienne des dispositifs de contrôle de mouvement.

D'autres caractéristiques, buts et avantages de l'invention ressortiront des revendications, de la description donnée ci-dessous et des dessins annexés. Dans ces dessins qui illustrent, à titre d'exemple, deux formes de réalisation de moteurs selon l'invention et son dimensionnement,

la Fig. 1 est une vue en coupe axiale d'une première forme d'exécution de l'invention, notamment d'un moteur hybride, selon la ligne I-I de la Fig. 2;

la Fig. 2 est une vue de face, dans le sens axial, du moteur de la Fig. 1;

la Fig. 3 est un détail agrandi d'une partie de la denture d'un moteur selon l'invention;

la Fig. 4 est une vue de face, dans le sens axial, d'une variante d'un moteur hybride selon l'invention; et

la Fig. 5 est une vue de face, dans le sens axial, d'une autre forme d'exécution de l'invention, notamment d'un moteur ou générateur à réluctance variable;

la Fig. 6 est une vue de face, dans le sens axial, d'une variante d'un moteur ou générateur à réluctance variable selon l'invention; et

la Fig. 7 est un graphique montrant la relation optimale entre l'entrefer E minimal et le potentiel magnétique maximal $U_{max}$ des dispositifs selon l'invention.

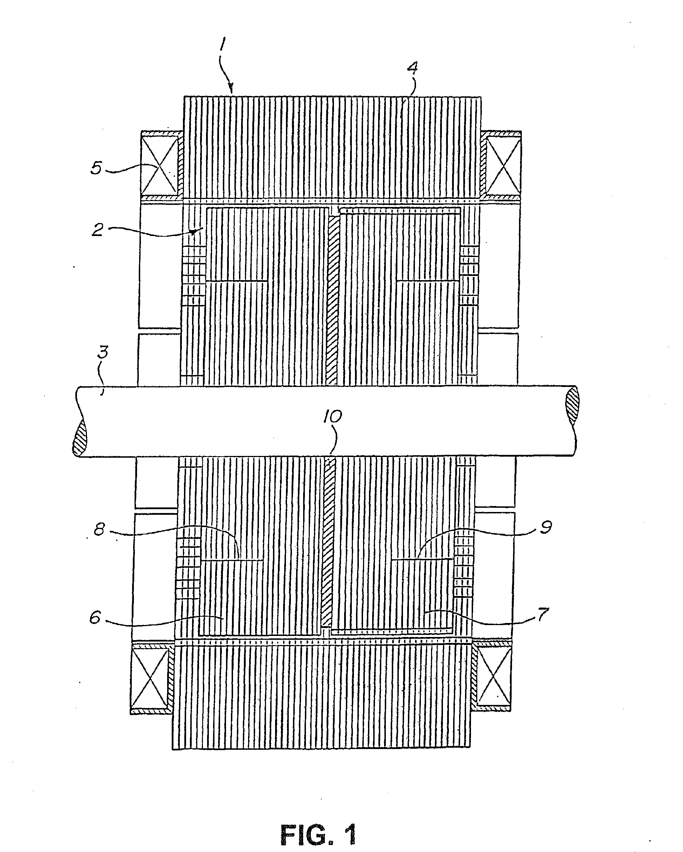

Selon la Fig. 1, le moteur hybride selon l'invention comporte un stator désigné dans son ensemble par 1 et un rotor 2 monté sur un axe 3. L'axe 3 est logé dans des paliers non représentés, supportés dans un boîtier du moteur également non représenté qui assure le centrage de l'axe 3 par rapport au stator 1.

Le stator 1 comprend une partie de circuit magnétique 4 réalisée par exemple par un empilage de tôles en fer-silicium. Des bobines électriques telles que 5 sont montées sur ce stator de la manière décrite plus loin. Le rotor 2 comporte deux parties polaires 6 et 7 constituées chacune par exemple par un empilement de tôles en fer-silicium, ces parties polaires présentant des creusures coaxiales respectives 8 et 9, notamment pour réduire l'inertie du rotor tout en n'affectant pas ses propriétés magnétiques. Un aimant permanent en forme de disque annulaire 10 est disposé entre les parties polaires 6 et 7 de manière à former un ensemble coaxial solidaire de l'axe 3. L'aimant 10 est aimanté dans le sens axial et son épaisseur dans ce sens est très faible par rapport à son diamètre extérieur.

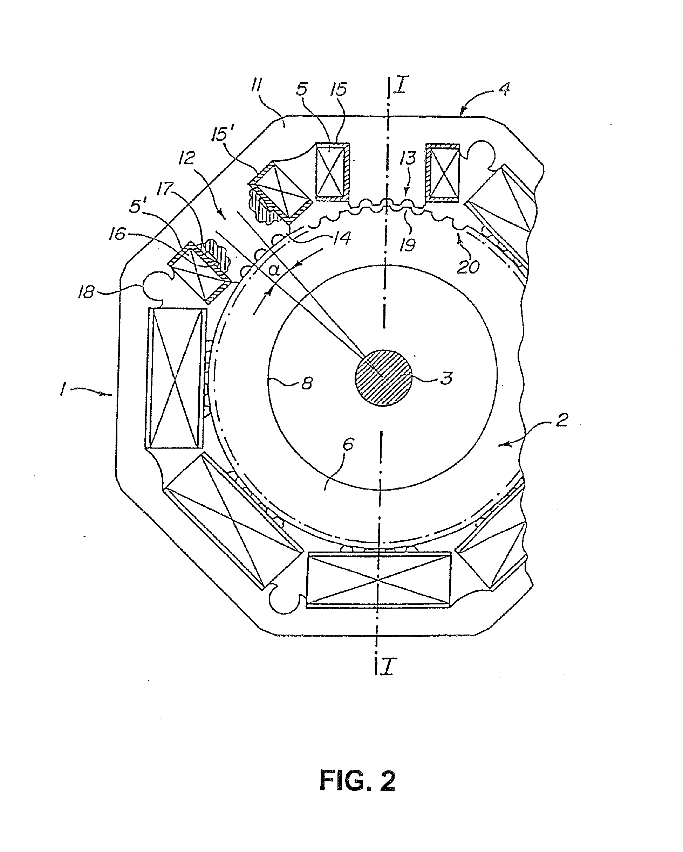

La Fig. 2 montre l'ensemble stator et rotor en vue dans le sens axial. Selon cette figure, la partie de circuit magnétique 4 du stator 1 comporte une partie essentiellement annulaire 11 et plusieurs parties polaires telles que 12, dirigées radialement vers l'intérieur du stator. Chacune des parties polaires 12 présente une partie de corps et une denture 13 formée de plusieurs dents telles que 14. Des bobines électriques telles que 5, 5', etc... sont préfabriquées sur des supports isolants tels que 15, 15' et sont montés sur les parties de corps de parties polaires correspondantes. Ces parties polaires ont une longueur uniforme dans le sens axial et une largeur uniforme dans le plan radial du moteur, de sorte que les ensembles bobine-support isolant peuvent être mis en place sur les parties polaires par l'intérieur du stator. Les supports isolants 15, 15' qui présentent une certaine élasticité peuvent être munis sur leur côté intérieur de parties saillantes 16 agencées pour pénétrer dans des encoches correspondantes 17 sur le flanc des parties polaires de manière à ce que les bobines soient retenues sur ces parties polaires. La forme de ces parties polaires et notamment l'absence d'épanouissements au niveau de la denture permet le montage décrit par lequel on évite la nécessité d'un bobinage in situ nettement plus compliqué et onéreux.

La forme extérieure de la partie 4 montré à la Fig. 2 est octogonale, en coupe transversale, le stator comportant en l'occurrence huit parties polaires 12. Une telle forme octogonale permet de prévoir des ouvertures ou alésages de fixation et de centrage 18 dans des angles du polygone, évitant ainsi un affaiblissement du circuit magnétique et le risque correspondant d'une saturation à l'endroit d'une section réduite.

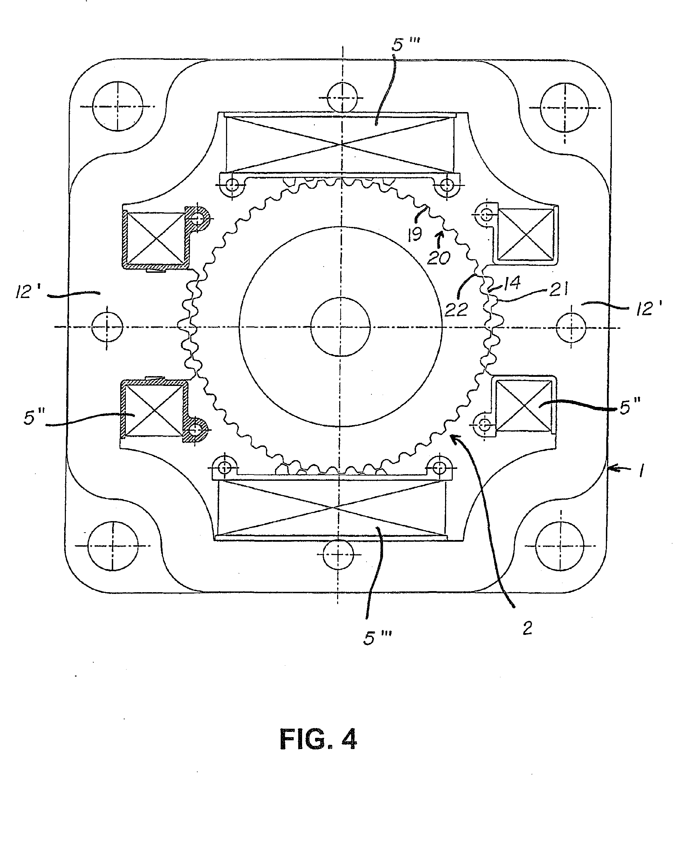

Le moteur hybride selon la Fig. 4 est très similaire à celui de la Fig. 2, sauf qu'il y a quatre parties polaires 12'. L'utilisation de deux bobines 5", 5'" par phase au lieu de quatre pour la forme d'exécution de la Fig. 2 permet d'appliquer deux fois plus de puissance électrique par bobine alors que chaque bobine comporte plus de cuivre. Il en résulte la possibilité d'engendrer presque deux fois plus d'ampères-tours par bobine qu'avec la disposition à huit pôles/huit bobines, selon la Fig. 2.

Le rotor 2 présente à sa périphérie une série de dents 19 formant une denture de pas uniforme 14.

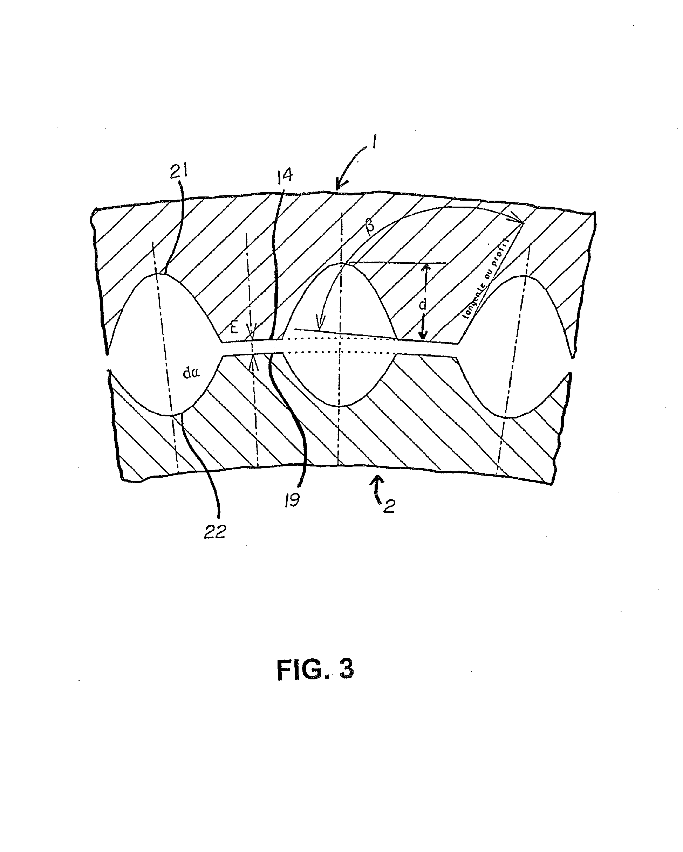

La Fig. 3 montre un détail de la denture 20 du rotor placée face à la denture 13 d'une partie polaire du stator. La forme et la dimension des dents 14 et 19 et des parties creuses adjacentes respectives 21 et 22 sont semblables, bien que la dent du stator soit plus creusée que la dent du rotor. Deux dents placées en regard l'une de l'autre forment entre-elles un entrefer de longueur E dans le sens radial, la valeur de E étant faible par rapport à la hauteur des dents. La particularité des dentures représentés à la Fig. 3 consiste notamment en la forme des creusures 21, 22 qui est de préférence essentiellement parabolique dans le plan radial du moteur, l'angle $\beta$ formé entre les tangentes au profil des dents sur les coins de celles-ci ayant une valeur d'environ 110°, soit une valeur comprise entre 95° et 125°, de préférence entre 105° et 115°. Une telle forme s'avère être particulièrement avantageuse lorsqu'on est en présence d'une induction élevée puisque la perte de potentiel dans les bouts de dents se trouve sensiblement réduite tout en ayant une bonne profondeur (d) des dents.

Le dimensionnement de l'entrefer selon l'invention repose sur la différence de potentiel magnétique maximal $U_{ni(max)}$ égale aux ampères-tours de la/les bobine(s) alimentant l'entrefer E. Ce potentiel est limité par la valeur maximale du courant i que le moteur peut supporter soit en régime permanent soit en régime de pourcentage de marche réduit, cette dernière valeur du courant pouvant être un multiple du courant maximal en régime permanent.

Dans les formes d'exécution des Figures 1, 2 et 4 (moteurs hybrides), on choisit l'aimant permanent et on le dimensionne de façon à ce qu'il engendre dans l'entrefer à peu près la même différence de potentiel que le courant maximal, c'est-à-dire $U_a \approx U_{ni(max)}$. La différence de potentiel maximal entre dents en regard est donc $U_{(max)} = 2U_{ni(max)}$.

Dans le cas du moteur mentionné plus haut utilisant un circuit magnétique en fer-silicum caractérisé par J=2T et optimisé pour un fonctionnement permanent, une bobine peut engendrer $U_{ni(max)}$=160At. En appliquant la relation déjà justifiée plus haut $E \geq 0,8 \mu_o U_{(max)}/J$, on trouve $E \geq 1,61 \times 10^{-4}$m. Il ne serait judicieux de prendre une valeur beaucoup plus élevée que la limite inférieure, par exemple $2,2 \times 10^{-4}$m soit plus 37 %, que si une excellente linéarité et un très faible taux de distorsion de la loi de couple de chaque phase était demandée, au détriment du couple maximal. L'induction maximale dans l'entrefer et dans les bouts de dents serait d'environ 1,8T pour l'exemple précité.

Il est toutefois avantageux de rester dans une gamme de valeurs définie par la relation $0,7\mu_o U_{(max)}/J \leq E \leq 1,1\mu_o U_{(max)}/J$. La limite supérieure a été choisie empiriquement de façon qu'une excellente linéarité soit atteinte avec une perte de couple maximale de moins de 30% par rapport à la limite inférieure de E, compte tenu de la forte réduction des pertes de potentiel dans le matériau doux.

Il est à noter que, l'aimant alimentant deux entrefers en série, il doit engendrer un potentiel de 320 At, plus de quoi compenser diverses pertes dans les couches de protection contre la corrosion et les interstices entre tôles. Cela s'obtient facilement avec un aimant NdFeB (Néodyme-Fer-Bore) qui, dans le cas de l'exemple de moteur selon la Fig. 4, soit un moteur diphasé comportant un total de deux pôles de stator par phase, peut avoir une épaisseur de l'ordre de 1,5 mm en travaillant peu au-dessus de son point de (BH) maximum. On ajuste ce point de fonctionnement par la longueur des pôles du rotor dans le sens axial et par la surface de l'aimant. L'entrefer minimum utilisé suivant l'art antérieur rend difficile l'ajustement du point de fonctionnement de l'aimant d'un aimant moderne de type NdFeB au voisinage de son point de (BH) maximum ; on a souvent une droite de charge caractérisée par $B/\mu_o H$=-4 à -5. Il en résulte qu'il faut un volume d'aimant supérieur (donc un coût supérieur) au volume de l'aimant suivant la présente invention.

Dans les moteurs selon l'invention, il est avantageux de prendre des mesures pour réduire le couple de détente parasite à 2PxN périodes/tour, P étant le nombre de phases du moteur et N le nombre de dents du rotor. Ce couple de détente croît avec le carré du potentiel de polarisation de l'entrefer par l'aimant, mais décroît aussi très vite avec l'entrefer. Pour l'annuler, ou au moins pour le réduire si la précision de réalisation n'est pas parfaite, on peut, comme il est bien connu, fausser légèrement le pas entre les dents de chaque partie polaire du stator de telle sorte que l'addition géométrique des vecteurs représentant le 2P-ième harmonique dû à chaque dent soit nulle.

Si le moteur ci-dessus avait été optimisé pour un fonctionnement à 25 % de pourcentage de marche, les potentiels seraient doublés et l'entrefer recommandé serait de 0,32mm. La vitesse de montée en puissance mécanique $C^2/I$, dite aussi « power rate », I étant le moment d'inertie du rotor, s'en trouverait plus que doublée ce qui est très surprenant par rapport à l'art antérieur où les plus faibles entrefers possibles sont réalisés.

L'augmentation de la longueur de l'entrefer dans les dispositifs selon l'invention permet, outre des tolérances de fabrication moins étroites que dans le cas des moteurs ou générateurs usuels, d'obtenir de nombreux avantages au niveau de la fabrication tels que par exemple le fait de pouvoir aimanter l'aimant permanent du rotor alors qu'il se trouve à l'extérieur du stator en raison du plus grand jeu d'introduction du rotor dans le stator. Une telle aimantation peut permettre de mieux saturer l'aimant et d'éviter des déformations permanentes dues au choc au moment de l'aimantation in situ. Mais surtout, il devient possible, grâce à une aimantation à l'extérieur du stator, de réaliser le rotor d'un moteur comportant deux ensembles formés chacun d'un aimant et de ses parties polaires, sous la forme d'une succession, dans le sens axial, d'une partie polaire extérieure, d'un premier aimant, de deux parties polaires centrales accolées, d'un second aimant et d'une partie polaire extérieure. L'aimantation des aimants pouvant être, dans ce cas, de sens opposé, les parties polaires centrales auront la même polarité, par exemple Nord, et les parties polaires extérieures feront apparaître des pôles Sud. Il n'y a ainsi pas de fuites magnétiques entre les extrémités du rotor et il n'est pas nécessaire de séparer magnétiquement les parties polaires centrales comme dans le cas d'une aimantation du rotor dans un moteur assemblé, où les parties polaires centrales ont des polarités opposées.

Dans le moteur hybride avec stator à quatre pôles et rotor à N=50 dents selon la Fig. 4, l'équilibrage dynamique des forces magnétiques n'est pas optimale avec deux parties polaires au rotor. Avec trois parties polaires, selon l'explication en rapport avec la forme d'exécution selon la Fig. 5 ci-dessus, on obtient un très bon équilibrage.

On peut également mentionner l'avantage de l'invention dans le cas où elle conduit à un entrefer suffisamment grand pour permettre de découper les tôles constituant le rotor et le stator en même temps. Il en résulte une simplification de la fabrication et une économie de matière importante.

La Fig. 5 montre un moteur triphasé à pure réluctance variable, donc sans aimant de polarisation de la denture, comportant six parties polaires 12" non dentées au stator 1', deux par phase, et quatre dents 19" au rotor 2". Ce type de moteur présente un regain d'intérêt avec les possibilités modernes de contrôle électronique. Il est utilisable avec commutation électronique et peut constituer suivant la présente invention un excellent moteur d'asservissement car sans couple de détente et sans pertes magnétiques au rotor en l'absence de courant. Le moment d'inertie de son rotor peut être beaucoup plus faible que celui du moteur hybride dont le diamètre du rotor est conditionné par la surface d'aimant nécessaire pour engendrer le potentiel de polarisation. Un tel moteur, comme il est d'usage pour les moteurs d'asservissement, est construit pour supporter des courants crêtes 8 à 10 fois supérieurs au courant acceptable en régime permanent.

Si le courant permanent engendre 150At par bobine 5, dans la même taille que l'exemple spécifique du moteur hybride décrit ci-dessus, l'entrefer doit être dimensionné pour un potentiel maximal d'au moins 1200At, ce qui conduit à un entrefer E d'au moins 0,6mm, ce qui est bien supérieur aux entrefers de l'état de la technique qui sont de l'ordre de grandeur de 0,1 mm ou moins suivant la précision de fabrication et autres tolérances.

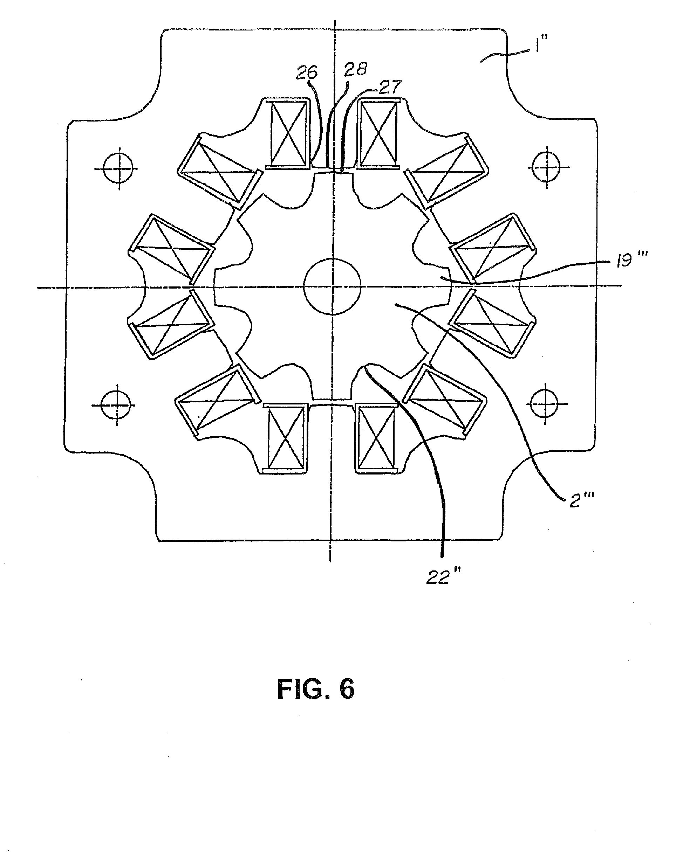

Avec une seule dent par partie polaire de stator et avec un entrefer constant, il est difficile d'obtenir un faible taux d'harmonique dans la fonction perméance A = f($\alpha$). Il convient plutôt d'utiliser par exemple un rotor cylindrique coopérant avec des extrémités de pôles stator planes comme représenté à la Fig. 3. Lorsque deux dents sont en regard, l'entrefer E entre leurs sommets varie donc légèrement d'une valeur maximale de chaque côté à une valeur minimale sur l'axe de symétrie. Dans ce cas, l'entrefer E concerné par la formule de dimensionnement revendiquée est l'entrefer minimal. La variante de la Fig. 6 est similaire à la variante de la Fig. 5 sauf qu'il y a huit dents 19''' au rotor 2'''. La creusure 22'' entre dents peut avantageusement avoir la forme d'une parabole, pour les mêmes raisons déjà données par rapport aux dents illustrées dans la Fig. 3. Chaque partie polaire de stator comporte un chanfrein 26 à son extrémité pour réduire l'induction quand on s'éloigne de l'extrémité. L'extrémité 27 des dents du rotor a le même rayon que le cercle circonscrit au rotor. Chaque extrémité 28 de partie polaire 12'' de stator est courbée avec un rayon tel que, lorsque les dents du stator et du rotor se font face, il y ait un entrefer variable entre elles. Dans un exemple spécifique où le potentiel $U_{max}$ est de 1100At, l'entrefer varie d'un minimum E valant $5 \cdot 10^{-4}$ à environ 1,65E, soit $8,25 \cdot 10^{-4}$m pour obtenir une loi de variation de perméance comportant un très faible pourcentage d'harmoniques.

L'invention peut s'appliquer à d'autres variantes de moteurs, par exemple selon les constructions mentionnées par T. Kenjo à la page 33 Fig. 2.19 (moteur linéaire) et page 34, Fig. 2.22 (deux entrefers en série), sans sortir du cadre de la présente invention.

D'autres possibilités et avantages apparaîtront à l'homme de métier tant au niveau de la fabrication que de l'utilisation du moteur selon l'invention.

## Revendications

1. Dispositif électromagnétique, à savoir un moteur ou générateur mono- ou polyphasé, linéaire ou rotatif, comportant au moins deux jeux de dents en matériau magnétique doux et en déplacement relatif par phase, un jeu de dent(s) étant lié au stator et l'autre au rotor, le dispositif ayant une taille lui permettant la génération d'un potentiel magnétique maximal $U_{max}$ d'environ $1,7 \cdot 10^{-4}$J/$\mu_o$ ampères-tours (At), **caractérisés en ce que** la longueur E de l'entrefer minimal entre dents du rotor et du stator mesurée dans le sens perpendiculaire au degré de liberté est approximativement égale ou plus grande que:

   la valeur de $0,7[1-5 \times 10^{-4} (U_{max} - 1,7 \times 10^{-4} \, J/ \, \mu_o)] \, \mu_o \, U_{max}/J$ quand

$$[1-5 \times 10^{-4} (U_{max} - 1,7 \times 10^{-4} \, J/ \, \mu_o)] \geq 0,5,$$

   ou la valeur de $0,35 \mu_o \, U_{max}/J$
   quand $[1-5 \times 10^{-4} (U_{max} - 1,7 \times 10^{-4} \, J/\mu_o)] < 0,5$;
   ou que E est plus grand que $2 \cdot 10^{-3}$m;

   où $\mu_o$ est la perméabilité du vide, $U_{max}$ est la différence de potentiel magnétique maximale engendrée pour faire passer le champ magnétique dans l'entrefer E, cette différence de potentiel étant due, soit aux seuls ampères-tours de la/les bobine(s) alimentant l'entrefer E, soit à l'addition desdits ampères-tours et de la différence de potentiel magnétique entre les deux jeux de dents, en l'absence de courant, due à un aimant permanent, et où J est la polarisation maximale du matériau magnétique doux utilisé pour la réalisation de la denture.

2. Dispositif selon la revendication 1, **caractérisé en ce que** la longueur E de l'entrefer est plus petite ou approximativement égale à la valeur $1,1 \, \mu_o \, U_{max}/J$.

3. Dispositif selon l'une des revendications précédentes, **caractérisé en ce que** la longueur E de l'entrefer est plus grande que $1,2 \times 10^{-4}$ m.

4. Dispositif selon l'une des revendications précédentes, **caractérisé en ce que** la longueur E de l'entrefer est plus grande que $1,5 \times 10^{-4}$ m.

**5.** Dispositif selon l'une des revendications précédentes, **caractérisé en ce que** des creusures (22, 22") entre les dents du rotor ont une forme essentiellement paraboliques.

**6.** Dispositif selon l'une des revendications précédentes, **caractérisé en ce que** des creusures 21 entre les dents du stator ont une forme essentiellement paraboliques.

**7.** Dispositif selon la revendication 5 ou 6, **caractérisé en ce que** l'angle β formé entre les tangentes au profit des dents sur les coins de celles-ci a une valeur comprise entre 95° et 120°.

**8.** Dispositif selon la revendication 7, **caractérisé en ce que** l'angle β a une valeur comprise entre 100° et 115°.

**9.** Dispositif selon l'une des revendications précédentes, **caractérisé en ce que** les parties polaires de stator (12) ont, dans le sens axial, une longueur uniforme et, dans un plan radial, une largeur uniforme, et **en ce que** les bobines (5) sont des bobines préfabriquées sur des supports isolants (15), ces bobines et les parties polaires de stator étant agencées de façon à permettre la mise en place de ces bobines préfabriquées sur lesdites parties polaires de stator.

**10.** Dispositif selon l'une des revendications précédentes, **caractérisé en ce que** le dispositif est un moteur hybride comportant un aimant permanent (10) fournissant un potentiel magnétique de façon que la différence de potentiel magnétique totale aux bornes de l'entrefer soit sensiblement égale à 0,5 $U_{max}$.

**11.** Dispositif selon la revendication 10, **caractérisé en ce que** le rotor (2) est de forme générale cylindrique constitué par au moins un ensemble coaxial comprenant l'aimant permanent (10) en forme de disque annulaire, aimanté axialement, et deux parties polaires de rotor (6, 7) magnétiquement perméables, disposées de part et d'autre dudit disque.

**12.** Dispositif selon les revendications 1 à 9, **caractérisé en ce que** le dispositif est un moteur ou générateur à réluctance variable.

**13.** Dispositif selon la revendication 12, **caractérisé en ce qu'**une extrémité (28) de partie polaire (12") de stator est courbée avec un rayon tel que, lorsque les dents du stator et du rotor se font face, il y a un entrefer variable entre elles.

**14.** Dispositif selon l'une des revendications précédentes, **caractérisé en ce que** la longueur de l'entrefer E est plus grande ou essentiellement égale à la valeur de 0,7 $\mu_o$ $U_{max}$ / J.

**15.** Dispositif selon la revendication 14, **caractérisé en ce que** la longueur de l'entrefer E est plus grande ou essentiellement égale à 0,8 $\mu_o$ $U_{max}$ / J.

**Claims**

**1.** An electromagnetic device, that is a linear or rotary single- or multi-phase motor or generator, comprising, for each phase, at least two relatively-movable sets of teeth made of soft magnetic material, one set of teeth being associated with the stator and the other with the rotor, the device being of a size enabling it to generate a maximum magnetic potential $U_{max}$ of about $1.7 \times 10^{-4} J/\mu_0$ ampere turns (At), **characterized in that** the width E of the minimum air-gap between teeth of the rotor and of the stator as measured in the direction perpendicular to their degree of freedom is approximately equal to or greater than:

the value $0.7[1 - 5\times10^{-4} (U_{max} - 1.7\times10^{-4}J/\mu_0)]\mu_0 U_{max}/J$
when $[1 - 5\times10^{-4} (U_{max} - 1.7\times10^{-4}J/\mu_0)] \geq 0.5$
or the value $0.35\mu_0 U_{max}/J$
when $[1 - 5\times10^{-4} (U_{max} - 1.7\times10^{-4}J/\mu_0)] < 0.5$;
or that E is greater than $2\times10^{-3}$ m;

where $\mu_0$ is the permeability of a vacuum, $U_{max}$ is the maximum generated magnetic potential difference for causing the magnetic field to pass through the air-gap E, said potential difference being due either solely to the ampere-turns of the coil(s) feeding the air-gap E, or to the sum of said ampere-turns plus the magnetic potential difference between the two sets of teeth in the absence of currents due to a permanent magnet, and where J is the maximum polarization of the soft magnetic material used for making the teeth.

2. A device according to claim 1, **characterized in that** the width E of the air-gap is smaller than or approximately equal to the value $1.1\mu_0 U_{max}/J$.

3. A device according to any preceding claim, **characterized in that** the width E of the air-gap is greater than $1.2\times10^{-4}$ m.

4. A device according to any preceding claim, **characterized in that** the width E of the air-gap is greater than $1.5\times10^{-4}$ m.

5. A device according to any preceding claim, **characterized in that** hollows (22, 22") between the rotor teeth are essentially of parabolic shape.

6. A device according to any preceding claim, **characterized in that** hollows (21) between the teeth of the stator are essentially of parabolic shape.

7. A device according to claim 5 or claim 6, **characterized in that** the angle $\beta$ formed between the tangents to the profile of the teeth on the corners thereof has a value lying in the range 95° to 120°.

8. A device according to claim 7, **characterized in that** the angle P has a value lying in the range 100° to 115°.

9. A device according to any preceding claim, **characterized in that** the pole pieces of the stator (12) are uniform in length in the axial direction, and uniform in width in a radial plane, and **in that** the coils (5) are prefabricated coils on insulating supports (15), said coils and pole pieces of the stator being arranged in such a manner as to enable the prefabricated coils to be put into place on said stator pole pieces.

10. A device according to any preceding claim, **characterized in that** the device is a hybrid motor comprising a permanent magnet (10) delivering magnetic potential so that the total magnetic potential difference at the terminals of the air-gap is substantially equal to $0.5U_{max}$.

11. A device according to claim 10, **characterized in that** the rotor (2) is generally cylindrical in shape being constituted by at least one assembly in axial alignment comprising the permanent magnet (10) in the form of an axially-magnetized annular disk, and two magnetically-permeable rotor pole pieces (6, 7) disposed on either side of said disk.

12. A device according to any one of claims 1 to 9, **characterized in that** the device is a variable reluctance motor or generator.

13. A device according to claim 12, **characterized in that** an end (28) of a stator pole piece (12") is curved with a radius such that, when the teeth of the stator and the rotor are facing each other, the air-gap between them is of varying width.

14. A device according to any preceding claim, **characterized in that** the air-gap width E is greater than or essentially equal to the value $0.7\mu_0 U_{max}/J$.

15. A device according to claim 14, **characterized in that** the air-gap width E is greater than or essentially equal to $0.8\mu_0 U_{max}/J$.

**Patentansprüche**

1. Elektromagnetische Vorrichtung, d.h. ein ein- oder mehrphasiger linearer oder drehender Motor oder Generator, der mindestens zwei Sätze von Zähnen aus weichmagnetischem Werkstoff und mit relativer Phasenverschiebung aufweist, wobei ein Satz von Zähnen mit dem Stator und der andere mit dem Rotor verbunden ist, wobei die Vorrichtung eine Größe hat, die ihr die Erzeugung eines maximalen magnetischen Potentials $U_{max}$ von etwa $1{,}7\cdot10^{-4} J/\mu_0$ Amperewindungen (Aw) ermöglicht, **dadurch gekennzeichnet, dass** die Länge E des minimalen Magnetspalts zwischen den Zähnen des Rotors und des Stators, gemessen in lotrechter Richtung zum Freiheitsgrad, etwa gleich oder größer ist als:

der Wert von $0{,}7[1{-}5\text{x}10^{-4} (U_{max} - 1{,}7\text{x}10^{-4} J/\mu_0)]\mu_0 U_{max}/J$,
wenn $[1{-}5\text{x}10^{-4}(U_{max} - 1{,}7\text{x}10^{-4} J/\mu_0)] \geq 0{,}5$,
oder der Wert von $0{,}35\mu_0 U_{max}/J$
wenn $[1{-}5\text{x}10^{-4}(U_{max} - 1{,}7\text{x}10^{-4}J/\mu_0)]{<}0{,}5$;

oder dass E größer ist als 2·10⁻³m;

wobei $\mu_0$ die Permeabilität des Vakuums, $U_{max}$ die maximale magnetische Potentialdifferenz, die erzeugt wird, um das Magnetfeld in den Magnetspalt E übergehen zu lassen, wobei diese Potentialdifferenz verursacht wird entweder nur die durch Amperewindungen der Spule(n), die den Magnetspalt E speisen, oder durch die Addition der Amperewindungen und der magnetischen Potentialdifferenz zwischen den beiden Sätzen von Zähnen in Abwesenheit von Strom, aufgrund eines Dauermagneten, und J die maximale Polarisation des weichmagnetischen Werkstoffs ist, der zur Herstellung der Zahnung verwendet wird.

2. Vorrichtung nach Anspruch 1, **dadurch gekennzeichnet, dass** die Länge E des Magnetspalts kleiner als der oder etwa gleich dem Wert $1{,}1\mu_0 U_{max}/J$ ist.

3. Vorrichtung nach einem der vorhergehenden Ansprüche, **dadurch gekennzeichnet, dass** die Länge E des Magnetspalts größer ist als $1{,}2 \times 10^{-4}$m.

4. Vorrichtung nach einem der vorhergehenden Ansprüche, **dadurch gekennzeichnet, dass** die Länge E des Magnetspalts größer ist als $1{,}5 \times 10^{-4}$m.

5. Vorrichtung nach einem der vorhergehenden Ansprüche, **dadurch gekennzeichnet, dass** Hohlkehlen (22, 22") zwischen den Zähnen des Rotors im Wesentlichen parabelförmig sind.

6. Vorrichtung nach einem der vorhergehenden Ansprüche, **dadurch gekennzeichnet, dass** Hohlkehlen des (21) zwischen den Zähnen des Stators im Wesentlichen parabelförmig sind.

7. Vorrichtung nach Anspruch 5 oder 6, **dadurch gekennzeichnet, dass** der zwischen den Tangenten zum Profil der Zähne an deren Ecken gebildete Winkel β eine Größe zwischen 95° und 120° hat.

8. Vorrichtung nach Anspruch 7, **dadurch gekennzeichnet, dass** der Winkel β eine Größe zwischen 100° und 115° hat.

9. Vorrichtung nach einem der vorhergehenden Ansprüche, **dadurch gekennzeichnet, dass** die Stator-Polbereiche (12) in axialer Richtung eine gleichmäßige Länge und in einer radialen Ebene eine gleichmäßige Breite haben, und dass die Spulen (5) auf Stützisolatoren (15) vorgefertigte Spulen sind, wobei diese Spulen und die Stator-Polbereiche so ausgebildet sind, dass sie das Einsetzen dieser vorgefertigten Spulen auf die Stator-Polbereiche erlauben.

10. Vorrichtung nach einem der vorhergehenden Ansprüche, **dadurch gekennzeichnet, dass** sie ein Hybrid-Motor ist, der einen Dauermagneten (10) aufweist, der ein derartiges magnetisches Potential liefert, dass die gesamte magnetische Potentialdifferenz an den Polen des Magnetspalts im Wesentlichen gleich $0{,}5\ U_{max}$ ist.

11. Vorrichtung nach Anspruch 10, **dadurch gekennzeichnet, dass** der Rotor (2) von allgemein zylindrischer Form ist und aus mindestens einer koaxialen Einheit besteht, die den Dauermagneten (10) in Form einer axial magnetisierten Ringscheibe und zwei magnetisch permeable Rotor-Polbereiche (6, 7) aufweist, die zu beiden Seiten der Scheibe angeordnet sind.

12. Vorrichtung nach den Ansprüchen 1 bis 9, **dadurch gekennzeichnet, dass** sie ein Motor oder Generator mit variabler Reluktanz ist.

13. Vorrichtung nach Anspruch 12, **dadurch gekennzeichnet, dass** ein Ende (28) eines Stator-Polbereichs (12") mit einem solchen Radius gekrümmt ist, dass, wenn die Zähne des Stators und des Rotors einander gegenüber liegen, zwischen ihnen ein variabler Magnetspalt vorhanden ist.

14. Vorrichtung nach einem der vorhergehenden Ansprüche, **dadurch gekennzeichnet, dass** die Länge des Magnetspalts E größer als oder im Wesentlichen gleich dem Wert von $0{,}7\ \mu_0 U_{max}/J$ ist.

15. Vorrichtung nach Anspruch 14, **dadurch gekennzeichnet, dass** die Länge des Magnetspalts E größer als oder im Wesentlichen gleich $0{,}8\ \mu_0 U_{max}/J$ ist.

FIG. 1

**FIG. 2**

**FIG. 3**

FIG. 4

**FIG. 5**

**FIG. 6**

$$E \geq 0{,}7 \; \mu_o \; U_{max} / J_{md}$$

$J_{md}$ = polarisation maximale du matériau doux

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **TAKASHI KENIO ; AKIRA SUGAVARA.** Stepping motors and their microprocessor controls. Clarendon Press, 1994, 28-36 3744
- Traite d'électricité de l'Ecole Polytechnique Fédérale de Lausanne. vol. IX

- **MARCEL JUFER ; GUNTER HEINE.** Hybrid stepper motor torque and inductance characteristics with saturation effects. *Incremental Motion Control Systems and Devices (IMCSD) Proceedings,* 1986, 207-211